# EUROPÄISCHE PATENTSCHRIFT

(11) **EP 3 655 259 B1**
(45) Veröffentlichungstag und Bekanntmachung des Hinweises auf die Patenterteilung: **29.09.2021**
(21) Anmeldenummer: 19758333.9
(22) Anmeldetag: 12.07.2019
(51) Int. Cl.: B60B 35/16

(54) **ACHSKÖRPER FÜR EIN ELEKTRISCH ANGETRIEBENES FAHRZEUG, INSBESONDERE FÜR EIN NIEDERFLURFAHRZEUG**
AXLE BODY FOR AN ELECTRIC DRIVEN VEHICLE, PARTICULARLY A LOW FLOOR VEHICLE
CORPS D'ESSIEU POUR VÉHICULE A PROPULSION ÉLECTRIQUE NOTAMMENT UN VÉHICULE À STRUCTURE SURBASSÉE

(30) Priorität: 06.08.2018 DE 102018213122
(43) Veröffentlichungstag der Anmeldung: 27.05.2020
(73) Patentinhaber: Ziehl-Abegg Automotive GmbH & Co. KG, 74635 Kupferzell (DE)
(72) Erfinder: GAUDITZ, Swen, 74423 Obersontheim (DE); RHODE, Georg, 99894 Leinatal (DE); KLEIN, Hans-Georg, 51674 Wiehl (DE)
(74) Vertreter: Ullrich & Naumann PartG mbB
(86) Internationale Anmeldenummer: PCT/DE2019/200076
(87) Internationale Veröffentlichungsnummer: WO 2020/030233

(56) Entgegenhaltungen:
- EP-A1- 3 348 421
- WO-A1-2014/013023
- CN-A- 107 097 589
- DE-A1-102007 025 684
- GB-A- 1 030 287

## Beschreibung

Die Erfindung betrifft einen Achskörper, insbesondere einen Portalachskörper für ein vorzugsweise elektrisch angetriebenes Fahrzeug, insbesondere für ein Niederflurfahrzeug, umfassend eine linke Hauptachsplatte und eine rechte Hauptachsplatte zur Aufnahme je eines Rads entlang einer Radachse, und eine Achsbrücke, die die linke Hauptachsplatte mit der rechten Hauptachsplatte verbindet.

Achskörper der in Rede stehenden Art sind aus der Praxis hinlänglich bekannt (z.B. aus EP 3 348 421 A1). Je nach Art eines Fahrzeugs ist es erforderlich, eine Achsbrücke zwischen einer rechten Radaufhängung und einer linken Radaufhängung des Fahrzeugs vertikal zu verschieben. Eine solche vertikale Verschiebung der Achsbrücke wird nach dem Stand der Technik durch die Verwendung von Vorgelegegetrieben an den Radaufhängungen erreicht. Dabei befindet sich je ein Vorgelegegetriebe direkt an einer jeweiligen Aufnahme eines rechten und linken Rads. Dadurch wird die Achsbrücke relativ zu einer Radachse der Räder parallel versetzt. Die Achsbrücke kann dabei relativ zu der Radachse beispielsweise vertikal nach oben versetzt sein, etwa um bei einem Geländefahrzeug die Bodenfreiheit zwischen den Rädern zu vergrößern, oder auch vertikal nach unten versetzt sein, etwa um bei einem Niederflurfahrzeug die Ausgestaltung eines barrierefreien Durchgangs im Innenraum auch zwischen den Rädern zu ermöglichen. Ferner kann der Achskörper zur Anbindung der Räder an weitere Fahrgestellglieder oder auch zum Tragen der Karosserie dienen.

Bei der Verwendung von Achskörpern für Niederflurfahrzeuge sind Komponenten in der Peripherie des Achskörpers, wie beispielsweise Räder, Antriebselemente oder Bremsen, gezwungenermaßen sehr tiefliegend angeordnet - also mit einer sehr geringen Bodenfreiheit. Im Betrieb des Niederflurfahrzeugs kann es deshalb vorkommen, dass diese Komponenten beispielsweise durch Steinschlag oder durch Störeinflüsse auf einer Fahrbahn - wie zum Beispiel Schnee und Eis, Geäst und Gestrüpp, Schlaglöcher und Fahrbahnunebenheiten - Schaden nehmen. Außerdem sind bekannte Achskörper nicht an die Verwendung von Antriebskonzepten mit Elektromotoren angepasst, sondern an die Verwendung von Achsbrücken mit darin gelagerten Antriebswellen.

Der vorliegenden Erfindung liegt daher die Aufgabe zugrunde, einen Achskörper der eingangs genannten Art für die Verwendung von Antriebskonzepten mit Elektromotoren auszugestalten und weiterzubilden, und insbesondere die Komponenten in der Peripherie des Achskörpers besser vor Störeinflüssen und Beschädigungen zu schützen.

Des Weiteren liegt der Erfindung die Aufgabe zugrunde, ein Niederflurfahrzeug anzugeben, dessen Achskörper den voranstehenden Anforderungen genügt.

Erfindungsgemäß ist die voranstehende Aufgabe durch die Merkmale des Anspruches 1 gelöst, wonach die Achsbrücke mittels einer vorderen Querstrebe und einer hinteren Querstrebe ausgebildet ist und mindestens eine Peripheriekomponente des Achskörpers zwischen der vorderen Querstrebe und der hinteren Querstrebe angeordnet ist.

Der nebengeordnete Anspruch 15 löst in Bezug auf das beanspruchte Niederflurfahrzeug die voranstehende Aufgabe mit einem Achskörper, der entsprechend ausgestaltet ist.

Der erfindungsgemäße Achskörper ist besonders geeignet für die Verwendung von Radnabenmotoren, weil die Achsbrücke nicht an eine Antriebswelle oder an ein etwaiges Differenzialgetriebe angepasst werden muss. Da eine Anpassung der Achsbrücke an diese mechanischen Antriebskomponenten nicht erforderlich ist, kann die erfindungsgemäße Ausgestaltung mit einer vorderen Querstrebe und einer hinteren Querstrebe erfolgen.

Dabei kann vorteilhafterweise mindestens eine Peripheriekomponente des Achskörpers zwischen der vorderen Querstrebe und der hinteren Querstrebe angeordnet sein. In erfindungsgemäßer Weise ist dabei zunächst erkannt worden, dass die Peripheriekomponenten des Achskörpers durch die Ausgestaltung der Achsbrücke mit einer vorderen Querstrebe und einer hinteren Querstrebe besser vor Beschädigungen geschützt sind. Dies gilt insbesondere für empfindliche Peripheriekomponenten von Antriebskonzepten mit Elektromotoren. Vorzugsweise kann ein Abstand zwischen der vorderen Querstrebe und der hinteren Querstreben größer als 50 Prozent und kleiner als 150 Prozent eines Durchmessers der Bremsscheibe sein. Ferner vorzugsweise sind die Hauptachsplatten parallel zu einander vertikal stehend angeordnet.

Da die Achsbrücke des erfindungsgemäßen Achskörpers mittels zweier Querstreben ausgebildet ist, lässt sich das Gewicht und die Stabilität des erfindungsgemäßen Achskörpers gegenüber einem Achskörper nach dem Stand der Technik verbessern.

Vorzugsweise kann der Achskörper weiter mindestens eine dem je einen Rad zugeordnete Scheibenbremse umfassen. Zudem kann die mindestens eine Peripheriekomponente des Achskörpers beispielsweise ein Bremssattel der Scheibenbremse sein. Dabei kann der Bremssattel insbesondere an einem unteren Ende einer Bremsscheibe der Scheibenbremse mittig senkrecht unterhalb einer Radachse angeordnet sein, insbesondere innerhalb eines Bereichs zwischen 3 Uhr und 9 Uhr, zwischen 4 Uhr und 8 Uhr, zwischen 5 Uhr und 7 Uhr oder in einer 6-Uhr-Position in Bezug auf die Bremsscheibe. Hierbei entspricht die Bremsscheibe einem Ziffernblatt einer Uhr. Da Bremsscheiben von Scheibenbremsen für gewöhnlich koaxial zu der Radachse angeordnet sind, kann eine Anordnung des Bremssattels zwischen der vorderen Querstrebe und der hinteren Querstrebe insbesondere dadurch erreicht werden, dass der Bremssattel in einem unteren Bereich der Bremsscheibe angeordnet wird, insbesondere innerhalb der genannten Bereiche.

Erfindungsgemäß ist die vordere Querstrebe tiefer angebracht, als die hintere Querstrebe. Da die vordere Querstrebe in einer Fahrtrichtung weiter vorne und tiefer angebracht ist als die hintere Querstrebe, wird der Schutz der Peripheriekomponenten des Achskörpers, die sich in Fahrtrichtung hinter der vorderen Querstrebe befinden, noch weiter verbessert. Schnee, Eis, Geäst und Gestrüpp, das die Peripheriekomponenten während der Fahrt in Fahrtrichtung beschädigen könnte, wird durch die tiefer angeordnete vordere Querstrebe von den Peripheriekomponenten abgeschirmt.

Vorzugsweise umfasst die Peripheriekomponente des Achskörpers einen Radbremszylinder der Scheibenbremse. Somit ist vorteilhafterweise auch der Radbremszylinder zwischen den Querstreben angeordnet und vor Störeinflüssen geschützt.

Gemäß einer besonders vorteilhaften Ausführungsform umfassen die linke Hauptachsplatte und/oder die rechte Hauptachsplatte sich nach außen erstreckende Abdeckungen. Dabei kann es sich jeweils um eine vordere Seitenwand, die sich an einem vorderen Ende der Hauptachsplatte nach außen erstreckt, eine hintere Seitenwand, die sich an einem hinteren Ende der Hauptachsplatte nach außen erstreckt, eine untere Verstrebung, die sich zwischen einer unteren Kante der vorderen Seitenwand und einer unteren Kante der hinteren Seitenwand erstreckt, und eine obere Verstrebung, die sich zwischen einer oberen Kante der vorderen Seitenwand und einer oberen Kante der hinteren Seitenwand erstreckt, handeln. Die Seitenwände und Verstrebungen sorgen hierbei nicht nur für eine Versteifung der Hauptachsplatten - die insbesondere die Halterung des jeweiligen Rads stabilisiert - sondern dienen auch dem Schutz der Peripheriekomponenten des Achskörpers. Sofern eine Scheibenbremse vorgesehen ist, können insbesondere die Bremsscheibe und der Bremssattel durch die Seitenwände und Verstrebungen abgeschirmt sein. Ferner können die Verstrebungen oder Seitenwände auch für die Aufnahme von Sensorik für Antriebs-, Brems- oder Radkomponenten verwendet werden.

Vorzugsweise ist mindestens eine der Abdeckungen demontierbar. Dies kann beispielsweise mittels lösbarer Schraubverbindungen realisiert sein und ermöglicht einen einfachen Zugang zu den abgeschirmten Peripheriekomponenten, beispielsweise zu der Scheibenbremse. Eine derartige Ausführungsform ist insbesondere hinsichtlich einer Durchführung von Wartungs- und Servicearbeiten an der Scheibenbremse oder für einen Austausch von anderen Peripheriekomponenten vorteilhaft.

Gemäß einer weiteren bevorzugten Ausführungsform umfasst die linke Hauptachsplatte und/oder die rechte Hauptachsplatte eine Motorflanschplatte für die Befestigung eines Radnabenmotors koaxial zu der Radachse. Eine solche Motorflanschplatte kann insbesondere verwendet werden, um einen elektrischen Radnabenmotor an dem erfindungsgemäßen Achskörper anzubringen, insbesondere einen Elektromotor für Niederflurfahrzeuge im Stadtverkehr.

Vorzugsweise ist auf der linken Hauptachsplatte eine sich nach außen erstreckende Hohlwelle mit einer nach außen gerichteten Stirnseite angeordnet. Dabei kann besonders vorzugsweise ein Stator des Radnabenmotors in die Hohlwelle gepasst sein. Diese Passung ist insbesondere kraftschlüssig ausgeführt und ermöglicht eine Übertragung von Drehmoment auf einen Rotor des Radnabenmotors beziehungsweise auf eines der Räder.

Nach einer weiteren vorteilhaften Ausführungsform umfasst der Stator entlang der Radachse einen Durchgang für Versorgungs- und/oder Steuerleitungen. Hierbei kann es sich um Versorgungs- und Steuerleitungen für die Energieversorgung, die Kühlung, die Kommunikation oder um andere Versorgungs- und/oder Steuerleitungen handeln. Bei dieser Ausführungsform definieren die Hohlwelle und der Stator gemeinsam eine Übergabeschnittstelle für die Versorgungs- und/oder Steuerleitungen zwischen dem Inneren des Achskörpers und dem Inneren des Stators.

Weiter vorzugsweise kann die Hohlwelle zusätzlich eine zu der Radachse koaxiale innere Nabenbohrung umfassen. Die Nabenbohrung weist vorzugsweise einen inneren Durchmesser und einen äußeren Durchmesser auf, wobei der innere Durchmesser kleiner ist als der äußere Durchmesser. Somit kann eine innere Oberfläche der Hohlwelle insbesondere konisch ausgestaltet sein. Insbesondere kann eine Kegelpresspassung zwischen dem Stator und der Hohlwelle eingerichtet ist. Um eine für die Kegelpresspassung erforderliche Axialkraft zu erzeugen, können umlaufend um die Radachse zwischen Motorflanschplatte und Stator Schraubverbindungen vorgesehen sein.

Gemäß einer vorteilhaften Ausführungsform umfasst der Stator eine Druckfluidbohrung. Die Druckfluidbohrung kann insbesondere eine innere Stirnseite des Stators mit einer Ringnut verbinden, wobei die Ringnut umlaufend auf einer äußeren Oberfläche des Stators ausgebildet ist. Vorzugsweise kann diese äußere Oberfläche des Stators konisch ausgestaltet und ein Teil der Kegelpresspassung mit der Hohlwelle sein. Auf diese Weise ermöglicht es die Druckfluidbohrung, die Passung zwischen dem Stator des Radnabenmotors und der Hohlwelle unter Verwendung eines mit Druck beaufschlagten Druckfluids zu lösen. Somit ist eine Wartung oder ein Austausch von Teilen des Rads oder des Rotors leicht möglich. Als Druckfluid kann dabei insbesondere Drucköl verwendet werden.

Gemäß einer weiteren bevorzugten Ausführungsform kann an einer radial inneren Kante der nach außen gerichteten Stirnseite der Hohlwelle ein Dichtungselement vorgesehen sein. Dieses Dichtungselement kann das Innere des Stators vor Verschmutzungen und anderen Umwelteinflüssen schützen. Insbesondere kann das Dichtungselement ein O-Ring sein.

Vorzugsweise kann die Hohlwelle auf der nach außen gerichteten Stirnseite weiter Passungselemente zum Ausrichten des Stators umfassen. Diese Passungselemente können insbesondere in Gestalt zweier sich gegenüberliegender Erhöhungen ausgebildet sein, die jeweils eine nach innen gerichtete Fläche aufweisen. Die zwei nach innen gerichteten Flächen der sich gegenüberliegenden Erhöhungen sind dabei vorzugsweise parallel zu einander. Diese Erhöhungen können insbesondere radial außenliegend auf der Stirnseite der Hohlwelle angeordnet sein, so dass die Erhöhungen im Falle einer Kombination mit dem soeben beschriebenen Dichtungselement nicht interferieren.

Gemäß einer besonders vorteilhaften Ausführungsform sind die Querstreben als Rohre ausgebildet. Vorzugsweise umfassen die linke Hauptachsplatte und die rechte Hauptachsplatte dabei jeweils vordere und hintere Muffen. Die als Rohre ausgebildeten Querstreben können in die Muffen hineingesteckt werden. Eine solche Ausgestaltung vereinfacht die Herstellung des erfindungsgemäßen Achskörpers. Aufgrund ihres günstigen Flächenträgheitsmoments sind Rohre der Stabilität des Achskörpers insgesamt förderlich. Außerdem lassen sich aufgrund der einfachen Steckverbindung zwischen den Rohren und den Muffen einzelne Elemente des Achskörpers austauschen.

Auf den als Rohre ausgebildeten Querstreben können gemäß einer weiter vorteilhaften Ausführungsform jeweils Verbindungselemente zur Verbindung des Achskörpers mit dem Niederflurfahrzeug - oder Teilen davon - vorgesehen sein. Diese Verbindungselemente können der Anpassung des Achskörpers an verschiedene Fahrzeugmodelle oder Baukastensysteme dienen. Darüber hinaus können die Verbindungselemente einen einfacheren Austausch von Achsstrebenplatten für eine oder mehrere Achsstreben ermöglichen. Insbesondere kann der Achskörper eine Starrachse sein, allerdings ist auch die Ausbildung einer Lenkachse mit den erfindungsgemäßen Merkmalen denkbar.

Erfindungsgemäß wird darüber hinaus ein Niederflurfahrzeug vorgeschlagen, das einen erfindungsgemäßen Achskörper umfasst.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in perspektivischer Darstellung eine Ausführungsform des erfindungsgemäßen Achskörpers mit beispielhaften Peripheriekomponenten,
- Fig. 2: in Schnittansicht einen Achskörper mit Peripheriekomponenten durch eine orthogonal zu einer Radachse verlaufende Schnittebene,
- Fig. 3: in perspektivischer Darstellung den Achskörper ohne Peripheriekomponenten,
- Fig. 4: in Schnittansicht den Achskörper ohne Peripheriekomponenten durch eine orthogonal zu der Radachse verlaufende Schnittebene,
- Fig. 5: in Detailansicht eine als Rohr ausgebildeten Querstrebe des Achskörpers und einer Muffe einer Hauptachsplatte,
- Fig. 6: in Schnittansicht eine Kegelpresspassung zwischen einem Stator eines Radnabenantriebs und einer Hohlwelle durch eine Schnittebene, die durch die Radachse verläuft, und
- Fig. 7: in Schnittansicht eine linke Seite eines erfindungsgemäßen Achskörpers durch eine Schnittebene, die durch die Radachse verläuft.

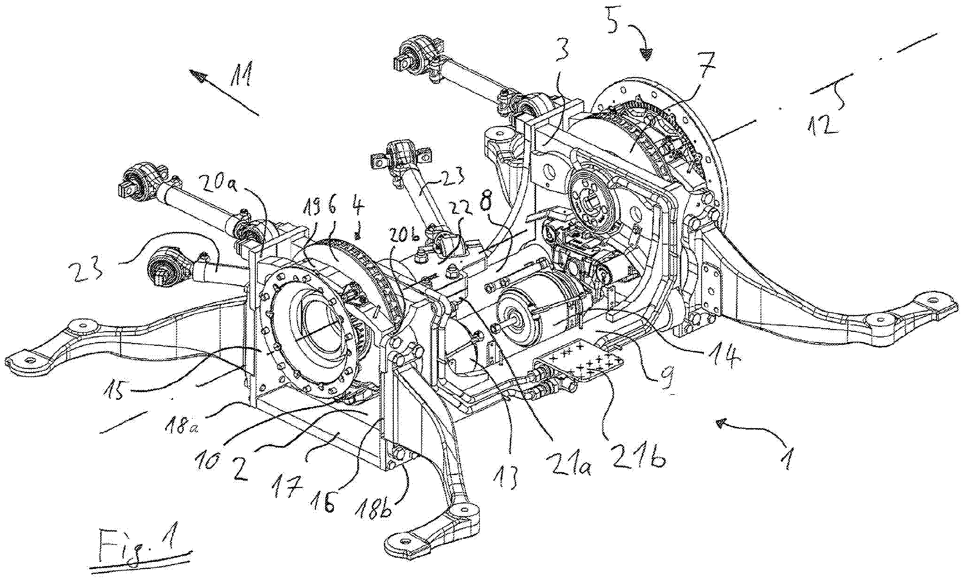

Fig. 1 zeigt einen Achskörper 1 für ein Niederflurfahrzeug (nicht dargestellt). Der Achskörper 1 umfasst eine linke Hauptachsplatte 2 und eine rechte Hauptachsplatte 3. Die Hauptachsplatten 2 und 3 dienen der Aufnahme je eines Rades (nicht dargestellt). Jedem Rad bzw. jeder Hauptachsplatte 2, 3 ist eine Scheibenbremse 4, 5 zugeordnet. In Fig. 1 sind insbesondere die Bremsscheiben 6, 7 der Scheibenbremsen 4, 5 zu sehen. Ferner umfasst der Achskörper 1 eine Achsbrücke, die einen unteren Bereich der linken Hauptachsplatte 2 und einen unteren Bereich der rechten Hauptachsplatte 3 miteinander verbindet. Diese Achsbrücke ist mittels einer vorderen Querstrebe 8 und einer hinteren Querstrebe 9 ausgebildet. Dabei ist mindestens eine Peripheriekomponente des Achskörpers 1 zwischen der vorderen Querstrebe 8 und der hinteren Querstrebe 9 angeordnet.

Bei der in Fig. 1 dargestellten Ausführungsform des erfindungsgemäßen Achskörpers 1 ist beispielsweise ein Bremssattel 10 der in Fahrtrichtung 11 links liegenden Scheibenbremse 4 zwischen der vorderen Querstrebe 8 und der hinteren Querstrebe 9 angeordnet. Dabei befindet sich der Bremssattel 10 an einem unteren Ende der Bremsscheibe 6 der Scheibenbremse 4. Der Bremssattel 10 ist mittig senkrecht unterhalb einer Radachse 12 angeordnet und befindet sich in einer 6-Uhr-Position in Bezug auf die Bremsscheibe 6. Auch die Radbremszylinder 13, 14 der Scheibenbremsen 4, 5 sind jeweils zwischen der vorderen Querstrebe 8 und der hinteren Querstrebe 9 angeordnet, so dass sie bei der Fahrt von den Querstreben 8, 9 geschützt werden. In Fig. 1 ist besonders gut zu erkennen, wie die linke Hauptachsplatte 2 sich nach außen erstreckende Abdeckungen 15, 16, 17, 19, umfasst. Dabei handelt es sich in dieser Ausführungsform zunächst um eine vordere Seitenwand 15, die sich an einem vorderen Ende der Hauptachsplatte nach außen erstreckt, und um eine hintere Seitenwand 16, die sich an einem hinteren Ende der Hauptachsplatte 2 nach außen erstreckt. Außerdem ist die Hauptachsplatte mit einer unteren Verstrebung 17, die sich zwischen einer unteren Kante 18a der vorderen Seitenwand 15 und einer unteren Kante 18b der hinteren Seitenwand 16 erstreckt und mit einer oberen Verstrebung 19, die sich zwischen einer oberen Kante 20a der vorderen Seitenwand 15 und einer oberen Kante 20b der hinteren Seitenwand 16 erstreckt, versehen.

Ferner sind die untere Verstrebung 17 und die obere Verstrebung jeweils mit Schraubverbindungen an den Seitenwänden 15, 16 befestigt und demontierbar. Durch Lösen dieser Schraubverbindungen können die Verstrebungen 17, 19 jeweils leicht abgenommen werden, um einen Zugang zur linken Scheibenbremse 4 für Wartungsarbeiten zu vereinfachen.

Die Querstreben 8, 9 sind als Rohre ausgebildet. Auf diesen Rohren sind jeweils Verbindungselemente 21a, 21b vorgesehen, wobei das Verbindungselement 21b der hinteren Querstrebe 9 mit einer Achsstrebenplatte 22 verbunden ist. An dieser Achsstrebenplatte 22 sind zwei Achsstreben 23 befestigt.

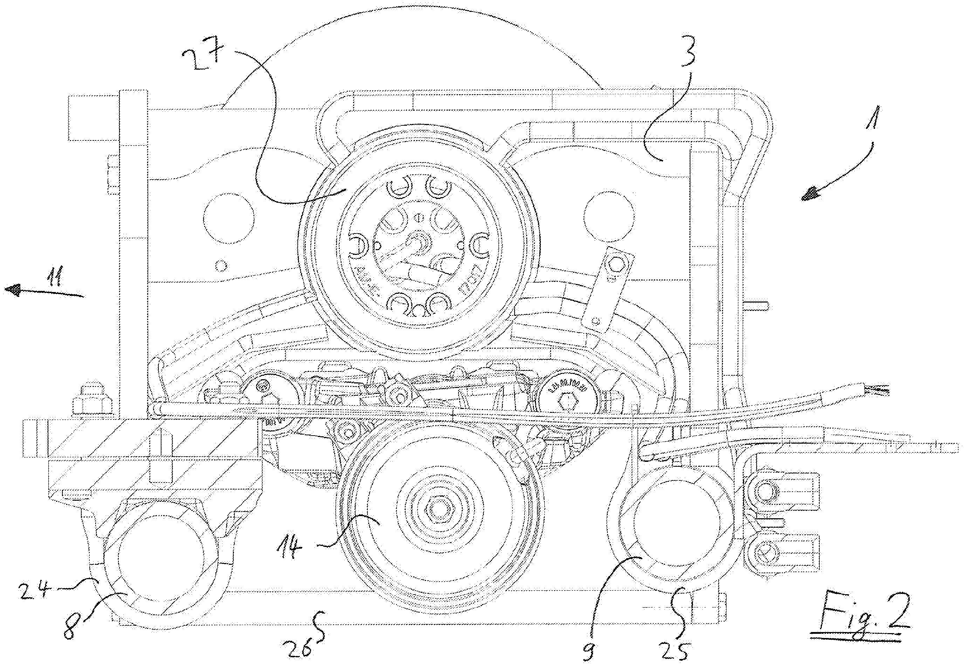

In Fig. 2 ist sehr gut zu erkennen, dass der rechte Radbremszylinder 14 zwischen der vorderen Querstrebe 8 und der hinteren Querstrebe 9 angeordnet ist. Die vordere Querstrebe 8 ist in eine vordere Muffe 24 hineingesteckt und die hintere Querstrebe 9 ist in eine hintere Muffe 25 hineingesteckt. Auf diese Weise ist der untere Bereich der rechten Hauptachsplatte 3 mit den Querstreben 8, 9 verbunden. Eine dazu senkrechte Achsverstrebung 26 erhöht die Stabilität des Achskörpers 1 noch weiter. In Fig. 2 ist besonders gut zu erkennen, dass die vordere Querstrebe 8 tiefer angebracht ist, als die hintere Querstrebe 9, um die dazwischen befindlichen Peripheriekomponenten bei einer Fahrt in Fahrtrichtung 11 noch besser zu schützen. Des Weiteren ist in Fig. 2 eine Motorflanschplatte 27 zur Befestigung eines Radnabenmotors (nicht dargestellt) koaxial zu der Radachse Dichtungselement (in Fig. 2 nicht dargestellt) zu sehen.

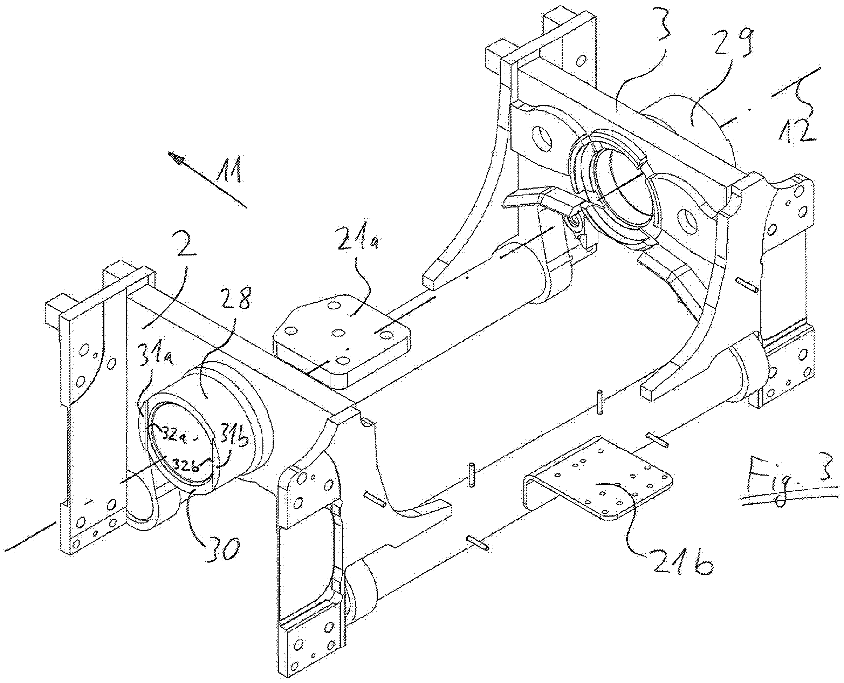

Da in Fig. 3 die Peripheriekomponenten nicht dargestellt sind, werden zwei Hohlwellen 28, 29 an den vertikal stehenden und parallel zu einander angeordneten Hauptachsplatten 2, 3 erkennbar. So ist beispielsweise zu sehen, wie die linke Hohlwelle 28 auf einer nach außen gerichteten Stirnseite 30 Passungselemente 31a, 31b zum Ausrichten eines Stators (in Fig. 3 nicht dargestellt) des Radnabenmotors (nicht dargestellt) umfasst. Die Passungselemente 31a, 31b sind in Gestalt zweier sich gegenüberliegender Erhöhungen ausgeführt und weisen nach innen gerichtete Flächen 32a, 32b auf. Die Flächen 32a, 32b sind parallel zu einander und sind radial außen auf der Stirnseite 30 der Hohlwelle 28 angeordnet, so dass radial innen auf der Stirnseite 30 der Hohlwelle 28 Platz für ein Dichtungselement (in Fig. 3 nicht dargestellt) bleibt.

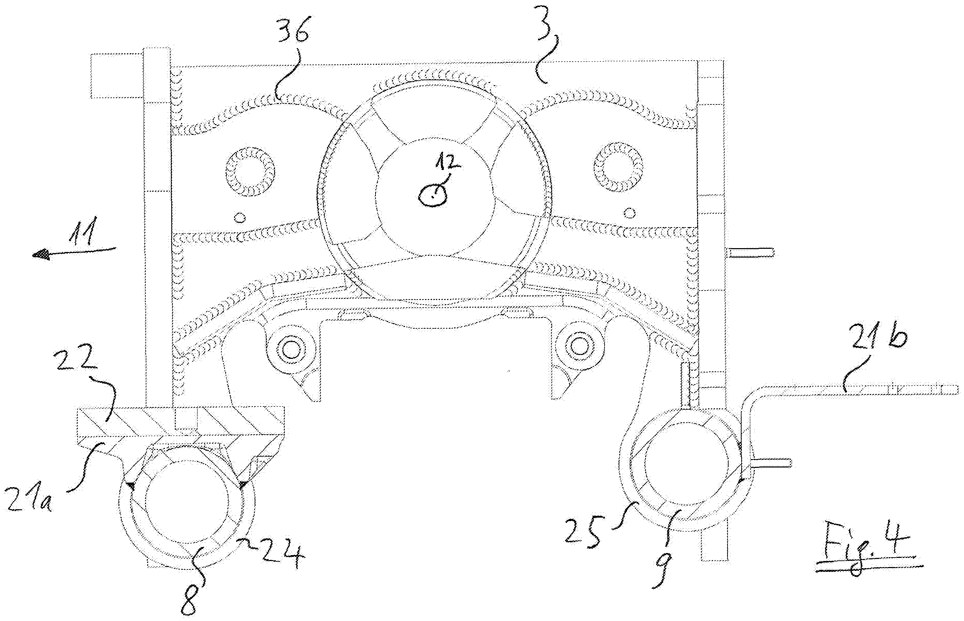

In Fig. 4 sind mehrere Schweißnähte 36 der Hauptachsplatte 3 zu sehen. Auch die Verbindungselemente 21a, 21b auf der vorderen Querstrebe 8 und auf der hinteren Querstrebe 9 sind im Schnitt dargestellt.

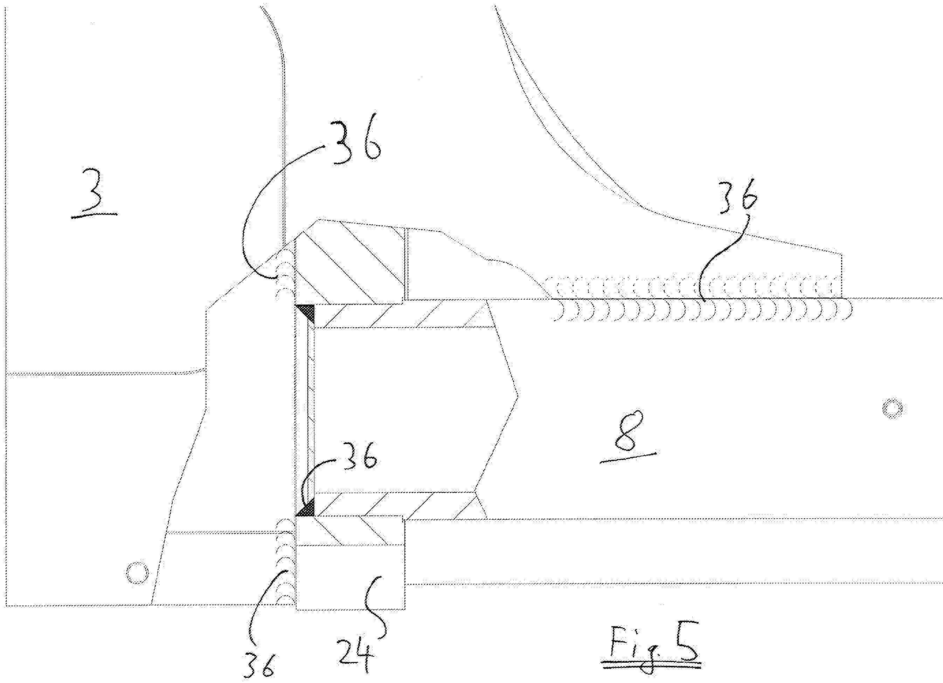

Fig. 5 zeigt, wie die als Rohr ausgestaltete Querstrebe 8 in die Muffe 24 der Hauptachsplatte 3 hineingesteckt und darin festgemacht ist. Diese Verbindung kann temporär oder dauerhaft mit Schweißnähten 36 gesichert werden.

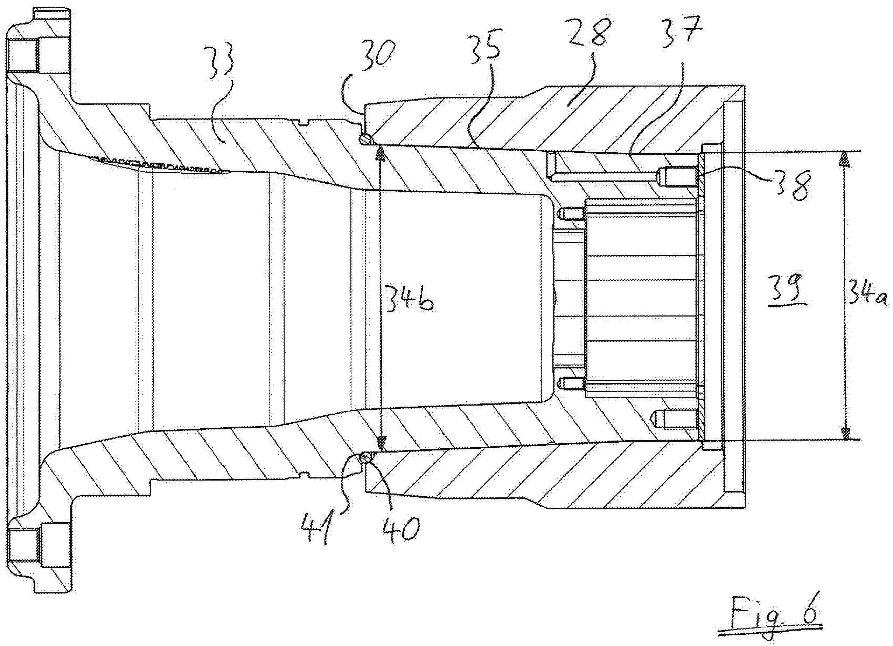

In Fig. 6 ist nun die Hohlwelle 28 in Zusammenbau mit einem Stator 33 des Radnabenantriebs zu sehen. Ein innerer Durchmesser 34a einer Nabenbohrung 35 der Hohlwelle 28 ist dabei kleiner als ein äußerer Durchmesser 34b der Nabenbohrung 35 der Hohlwelle 28. Auf diese Weise ist eine Kegelpresspassung zwischen dem Stator 33 und der Hohlwelle 28 verwirklicht. Eine Druckfluidbohrung 36 verbindet eine äußere Oberfläche 37 des Stators 33 mit einer inneren Stirnseite 38 des Stators 33, so dass von einer Innenseite 39 her mit Druck beaufschlagtes Drucköl durch die Druckfluidbohrung 36 zwischen die beiden Flächen 35, 37 der Kegelpresspassung - die sich jeweils innen an der Hohlwelle und außen an dem Stator befinden - zuführen lässt. An einer radial inneren Kante 40 der nach außen gerichteten Stirnseite 30 der Hohlwelle 28 ist ein Dichtungselement 41 in Gestalt eines O-Rings vorgesehen.

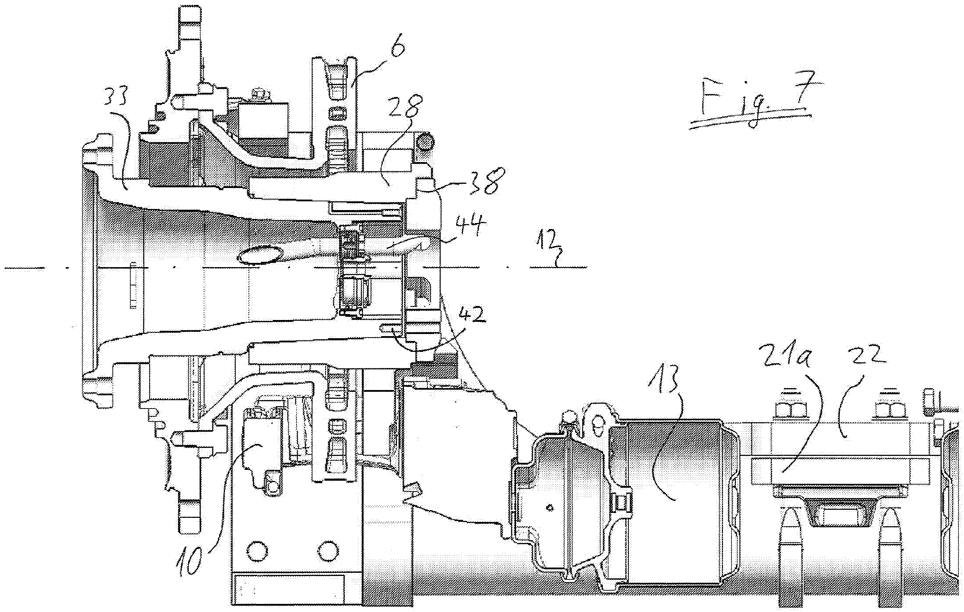

Fig. 7 zeigt die Baugruppe aus Hohlwelle 28 und Stator 33 des Radnabenantriebs im Zusammenbau mit dem erfindungsgemäßen Achskörper 1 sowie dessen Peripheriekomponenten. Auf der inneren Stirnseite 38 der Hohlwelle ist die Motorflanschplatte 27 zu erkennen. Über Schraubverbindungen 42 ist die Motorflanschplatte 27 mit dem Stator 33 des Radnabenantriebs verbunden. Über diese Schraubverbindungen 42 werden die Haltekräfte der Kegelpresspassung aufgebracht. Ferner ist die Bremsscheibe 6 in der Schnittansicht zu sehen. Am unteren Ende der Bremsscheibe 6 befindet sich der Bremssattel 10, der mit der Bremsscheibe 6 eingreifen kann, um einen Bremsvorgang durchzuführen. Dazu wird dem Bremssattel 10 Bremsflüssigkeit aus dem Radbremszylinder 13 zugeführt. Bei schweren Nutzfahrzeugen, d.h. bei Nutzfahrzeugen > 7,5 t, sind die Bremsen im Allgemeinen pneumatisch betrieben, so dass in diesem Falle das Arbeitsmedium Luft bzw. Druckluft ist. Schließlich ist in Fig. 7 zu erkennen, dass der Stator 33 entlang der Radachse 12 einen Durchgang 43 für Versorgungs- und/oder Steuerleitungen 44 umfasst.

Hinsichtlich weiterer vorteilhafter Ausgestaltungen des erfindungsgemäßen Achskörpers wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele des erfindungsgemäßen Achskörpers lediglich zur Erörterung der beanspruchten Lehre dienen, diese jedoch nicht auf die Ausführungsbeispiele einschränken.

### Bezugszeichenliste

- 1: Achskörper
- 2: Linke Hauptachsplatte
- 3: Rechte Hauptachsplatte
- 4: Linke Scheibenbremse
- 5: Rechte Scheibenbremse
- 6: Linke Bremsscheibe
- 7: Rechte Bremsscheibe
- 8: Vordere Querstrebe
- 9: Hintere Querstrebe
- 10: Bremssattel
- 11: Fahrtrichtung
- 12: Radachse
- 13: Linker Radbremszylinder
- 14: Rechter Radbremszylinder
- 15: Vordere Seitenwand
- 16: Hintere Seitenwand
- 17: Untere Verstrebung
- 18a, 18b: Untere Kanten
- 19: Obere Verstrebung
- 20a, 20b: Obere Kanten
- 21a, 21b: Verbindungselemente
- 22: Achsstrebenplatte
- 23: Achsstreben
- 24: Vordere Muffe
- 25: Hintere Muffe
- 26: Senkrechte Achsverstrebung
- 27: Motorflanschplatte
- 28: Linke Hohlwelle
- 29: Rechte Hohlwelle
- 30: Stirnseite
- 31a, 31b: Passungselemente
- 32a, 32b: Parallele nach innen gerichtete Flächen
- 33: Stator
- 34a, 34b: Durchmesser
- 35: Nabenbohrung
- 36: Druckfluidbohrung
- 37: Äußere Oberfläche
- 38: Innere Stirnseite
- 39: Innenseite
- 40: Radial innere Kante
- 41: Dichtungselement
- 42: Schraubverbindungen
- 43: Durchgang
- 44: Versorgungs-/Steuerleitungen

## Patentansprüche

1. Achskörper (1), insbesondere Portalachskörper für ein vorzugsweise elektrisch angetriebenes Fahrzeug, insbesondere für ein Niederflurfahrzeug, umfassend: eine linke Hauptachsplatte (2) und eine rechte Hauptachsplatte (3) zur Aufnahme je eines Rads entlang einer Radachse (12); und eine Achsbrücke, die die linke Hauptachsplatte (2) mit der rechten Hauptachsplatte (3) verbindet,
wobei die Achsbrücke mittels einer vorderen Querstrebe (8) und einer hinteren Querstrebe (9) ausgebildet ist und mindestens eine Peripheriekomponente des Achskörpers (1) zwischen der vorderen Querstrebe (8) und der hinteren Querstrebe (9) angeordnet ist,
**dadurch gekennzeichnet, dass** die vordere Querstrebe (8) im in einem Fahrzeug eingebauten Zustand tiefer angebracht ist, als die hintere Querstrebe (9).

2. Achskörper nach Anspruch 1, **dadurch gekennzeichnet, dass** der Achskörper (1) weiter mindestens eine dem je einen Rad zugeordnete Scheibenbremse (4, 5) umfasst, wobei die mindestens eine Peripheriekomponente des Achskörpers (1) einen Bremssattel (10) der Scheibenbremse (4, 5) umfasst.

3. Achskörper nach Anspruch 2, **dadurch gekennzeichnet, dass** der Bremssattel (10) an einem unteren Ende einer Bremsscheibe (6, 7) der Scheibenbremse (4, 5) mittig senkrecht unterhalb der Radachse (12) angeordnet ist, insbesondere innerhalb eines Bereichs zwischen 3 Uhr und 9 Uhr, zwischen 4 Uhr und 8 Uhr, zwischen 5 Uhr und 7 Uhr, oder in einer 6-Uhr-Position in Bezug auf die Bremsscheibe (6, 7).

4. Achskörper nach Anspruch 2 oder Anspruch 3, **dadurch gekennzeichnet, dass** die mindestens eine Peripheriekomponente des Achskörpers (1) einen Radbremszylinder (13, 14) der Scheibenbremse (4, 5) umfasst.

5. Achskörper nach einem der Ansprüche 1 bis 4, **dadurch gekennzeichnet, dass** die linke Hauptachsplatte (2) und/oder eine rechte Hauptachsplatte (3) sich nach außen erstreckende Abdeckungen (15, 16, 17, 19) umfassen, wobei mindestens einer der Abdeckungen (15, 16, 17, 19) demontierbar sein kann.

6. Achskörper nach einem der Ansprüche 1 bis 5, **dadurch gekennzeichnet, dass** die linke Hauptachsplatte (2) und/oder eine rechte Hauptachsplatte (3) eine Motorflanschplatte (27) für die Befestigung eines Radnabenmotors koaxial zu der Radachse (12) umfasst.

7. Achskörper nach einem der Ansprüche 1 bis 6, **dadurch gekennzeichnet, dass** auf der linken Hauptachsplatte (2) und/oder auf der rechten Hauptachsplatte (3) eine sich nach außen erstreckende Hohlwelle (28, 29) mit einer nach außen gerichteten Stirnseite (30) angeordnet ist, wobei ein Stator (33) des Radnabenmotors in die Hohlwelle (28, 29) gepasst sein kann.

8. Achskörper nach Anspruch 7, **dadurch gekennzeichnet, dass** der Stator (33) entlang der Radachse (12) einen Durchgang für Versorgungs- und/oder Steuerleitungen (44) umfasst.

9. Achskörper nach Anspruch 7 oder Anspruch 8, **dadurch gekennzeichnet, dass** die Hohlwelle (28, 29) eine zu der Radachse (12) koaxiale, innere Nabenbohrung (35) umfasst, und die Nabenbohrung (35) einen inneren Durchmesser (34a) und einen äußeren Durchmesser (34b) aufweist, wobei der innere Durchmesser (34a) kleiner ist als der äußere Durchmesser (34b), wobei eine Kegelpresspassung zwischen dem Stator (33) und der Hohlwelle (28, 29) eingerichtet sein kann.

10. Achskörper nach einem der Ansprüche 7 bis 9, **dadurch gekennzeichnet, dass** der Stator (33) eine Druckfluidbohrung (36) umfasst, die es ermöglicht, die Passung zwischen dem Stator (33) des Radnabenmotors und der Hohlwelle (28, 29) unter Verwendung eines mit Druck beaufschlagen Druckfluids zu lösen.

11. Achskörper nach einem der Ansprüche 7 bis 10, **dadurch gekennzeichnet, dass** an einer radial inneren Kante (40) der nach außen gerichteten Stirnseite (30) der Hohlwelle (28, 29) ein Dichtungselement (41) vorgesehen ist.

12. Achskörper nach einem der Ansprüche 7 bis 11, **dadurch gekennzeichnet, dass** die Hohlwelle (28, 29) auf der nach außen gerichteten Stirnseite Passungselemente (31a, 31b) zum Ausrichten des Stators (33) umfasst.

13. Achskörper nach einem der Ansprüche 1 bis 12, **dadurch gekennzeichnet, dass** die Querstreben (8, 9) Rohre sind und die linke Hauptachsplatte (2) und die rechte Hauptachsplatte (3) jeweils vordere und hintere Muffen (24, 25) umfassen, in die die Querstreben (8, 9) hineingesteckt sind, wobei auf den als Rohre ausgebildeten Querstreben (8, 9) jeweils Verbindungselemente (21a, 21b) zur Verbindung des Achskörpers (1) mit dem Fahrzeug vorgesehen sein können.

14. Niederflurfahrzeug mit einem Achskörper (1) nach einem der Ansprüche 1 bis 13.

## Claims

1. Axle body (1), in particular portal axle body for a preferably electrically driven vehicle, in particular for a low-floor vehicle, comprising: a left main axle plate (2) and a right main axle plate (3) for receiving a wheel in each case along a wheel axle (12); and an axle bridge which connects the left main axle plate (2) to the right main axle plate (3),
wherein the axle bridge is constructed by means of a front transverse strut (8) and a rear transverse strut (9) and at least one peripheral component of the axle body (1) is arranged between the front transverse strut (8) and the rear transverse strut (9),
**characterised in that** the front transverse strut (8) in the state installed in a vehicle is fitted lower than the rear transverse strut (9).

2. Axle body according to claim 1, **characterised in that** the axle body (1) further comprises at least one disc brake (4, 5) which is associated in each case with a wheel, wherein the at least one peripheral component of the axle body (1) comprises a brake calliper (10) of the disc brake (4, 5).

3. Axle body according to claim 2, **characterised in that** the brake calliper (10) is arranged at a lower end of a brake disc (6, 7) of the disc brake (4, 5) centrally perpendicularly below the wheel axle (12), in particular within a range between 3 o'clock and 9 o'clock, between 4 o'clock and 8 o'clock, between 5 o'clock and 7 o'clock, or in a 6 o'clock position with respect to the brake disc (6, 7).

4. Axle body according to claim 2 or claim 3, **characterised in that** the at least one peripheral component of the axle body (1) comprises a wheel brake cylinder (13, 14) of the disc brake (4, 5).

5. Axle body according to any one of claims 1 to 4, **characterised in that** the left main axle plate (2) and/or a right main axle plate (3) comprise(s) covers (15, 16, 17, 19) which extend outwards, wherein at least one of the covers (15, 16, 17, 19) may be able to be disassembled.

6. Axle body according to any one of claims 1 to 5, **characterised in that** the left main axle plate (2) and/or a right main axle plate (3) comprise(s) a motor flange plate (27) for securing a wheel hub motor coaxially relative to the wheel axle (12).

7. Axle body according to any one of claims 1 to 6, **characterised in that** an outwardly extending hollow shaft (28, 29) with an outwardly directed end face (30) is arranged on the left main axle plate (2) and/or on the right main axle plate (3), wherein a stator (33) of the wheel hub motor can be fitted in the hollow shaft (28, 29).

8. Axle body according to claim 7, **characterised in that** the stator (33) comprises along the wheel axle (12) a passage for supply and/or control lines (44).

9. Axle body according to claim 7 or claim 8, **characterised in that** the hollow shaft (28, 29) comprises an inner hub hole (35) which is coaxial relative to the wheel axle (12) and the hub hole (35) has an inner diameter (34a) and an outer diameter (34b), wherein the inner diameter (34a) is smaller than the outer diameter (34b), wherein a conical press-fit can be configured between the stator (33) and the hollow shaft (28, 29).

10. Axle body according to any one of claims 7 to 9, **characterised in that** the stator (33) comprises a pressure fluid hole (36) which enables the fit between the stator (33) of the wheel hub motor and the hollow shaft (28, 29) to be released using a pressure fluid which is acted on with pressure.

11. Axle body according to any one of claims 7 to 10, **characterised in that** a sealing element (41) is provided on a radially inner edge (40) of the outwardly directed end face (30) of the hollow shaft (28, 29).

12. Axle body according to any one of claims 7 to 11, **characterised in that** the hollow shaft (28, 29) comprises on the outwardly directed end face fitting elements (31a, 31b) for orientating the stator (33).

13. Axle body according to any one of claims 1 to 12, **characterised in that** the transverse struts (8, 9) are pipes and the left main axle plate (2) and the right main axle plate (3) comprise in each case front and rear sleeves (24, 25) in which the transverse struts (8, 9) are inserted, wherein connection elements (21a, 21b) for connecting the axle body (1) to the vehicle may be provided in each case on the transverse struts (8, 9) which are constructed as pipes.

14. Low-floor vehicle having an axle body (1) according to any one of claims 1 to 13.

## Revendications

1. Corps d'essieu (1), plus particulièrement corps d'essieu axial pour un véhicule entraîné plus particulièrement de manière électrique, plus particulièrement pour un véhicule à structure surbaissée, comprenant : une plaque d'essieu principale gauche (2) et une plaque d'essieu principale droite (3) pour le logement chacune d'une roue le long d'un essieu (12) ; et un pont d'essieu qui relie la plaque d'essieu principale gauche (2) avec la plaque d'essieu principale droite (3),
dans lequel le pont d'essieu est réalisé au moyen d'une traverse avant (8) et d'une traverse arrière (9) et au moins un composant périphérique du corps d'essieu (1) est disposé entre la traverse avant (8) et la traverse arrière (9),
**caractérisé en ce que** la traverse avant (8) est montée, dans l'état monté dans un véhicule, plus bas que la traverse arrière (9).

2. Corps d'essieu selon la revendication 1, **caractérisé en ce que** le corps d'essieu (1) comprend en outre au moins un frein à disque (4, 5) à chacune des roues, dans lequel l'au moins un composant périphérique du corps d'essieu (1) comprend un étrier de frein (10) du frein à disque (4, 5).

3. Corps d'essieu selon la revendication 2, **caractérisé en ce que** l'étrier de frein (10) est disposé à une extrémité inférieure d'un disque de frein (6, 7) du frein à disque (4, 5), de manière centrale perpendiculairement en dessous de l'essieu (12), plus particulièrement dans une zone entre 3 heures et 9 heures, entre 4 heures et 8 heures, entre 5 heures et 7 heures ou dans une position à 6 heures par rapport au disque de frein (6, 7).

4. Corps d'essieu selon la revendication 2 ou la revendication 3, **caractérisé en ce que** l'au moins un composant périphérique du corps d'essieu (1) comprend un cylindre de frein de roue (13, 14) du frein à disque (4, 5).

5. Corps d'essieu selon l'une des revendications 1 à 4, **caractérisé en ce que** la plaque d'essieu principale gauche (2) et/ou la plaque d'essieu principale droite (3) comprennent des recouvrements (15, 16, 17, 19) s'étendant vers l'extérieur, dans lequel au moins un des recouvrements (15, 16, 17, 19) peut être démontable.

6. Corps d'essieu selon l'une des revendications 1 à 5, **caractérisé en ce que** la plaque d'essieu principale gauche (2) et/ou la plaque d'essieu principale droite (3) comprennent une plaque à bride de moteur (27) pour le montage d'un moteur de moyeu de roue de manière coaxiale par rapport à l'essieu (12).

7. Corps d'essieu selon l'une des revendications 1 à 6, **caractérisé en ce que**, sur la plaque d'essieu principale gauche (2) et/ou la plaque d'essieu principale droite (3), est disposé un arbre creux (28, 29) s'étendant vers l'extérieur, avec une face frontale (30) orientée vers l'extérieur, dans lequel un stator (33) du moteur de moyeu de roue peut être inséré dans l'arbre creux (28, 29).

8. Corps d'essieu selon la revendication 7, **caractérisé en ce que** le stator (33) comprend, le long de l'essieu (12), un passage pour des lignes d'alimentation et/ou de commande (44).

9. Corps d'essieu selon la revendication 7 ou la revendication 8, **caractérisé en ce que** l'arbre creux (28, 29) comprend un alésage de moyeu interne (35), coaxial par rapport à l'essieu (12), et l'alésage de moyeu (35) présente un diamètre intérieur (34a) et un diamètre extérieur (34b), dans lequel le diamètre intérieur (34a) est inférieur au diamètre extérieur (34b), dans lequel un ajustement serré conique peut être prévu entre le stator (33) et l'arbre creux (28, 29).

10. Corps d'essieu selon l'une des revendications 7 à 9, **caractérisé en ce que** le stator (33) comprend un alésage à fluide sous pression (36) qui permet de détacher l'ajustement entre le stator (33) du moteur de moyeu de roue et l'arbre creux (28, 29) en utilisant un fluide sous pression.

11. Corps d'essieu selon l'une des revendications 7 à 10, **caractérisé en ce que**, sur l'arête radiale interne (40) de la face frontale (30) orientée vers l'extérieur de l'arbre creux (28, 29), est prévu un élément d'étanchéité (41).

12. Corps d'essieu selon l'une des revendications 7 à 11, **caractérisé en ce que** l'arbre creux (28, 29) comprend, sur la face frontale orientée vers l'extérieur, des éléments d'ajustement (31a, 31b) pour l'orientation du stator (33).

13. Corps d'essieu selon l'une des revendications 1 à 12, **caractérisé en ce que** les traverses (8, 9) sont des tubes et la plaque d'essieu principale gauche (2) et la plaque d'essieu principale droite (3) comprennent chacune des manchons avant et arrière (24, 25), dans lesquels les traverses (8, 9) sont insérées, dans lequel, sur chacune des traverses (8, 9) conçues comme des tubes, des éléments de liaison (21a, 21b) peuvent être prévus pour la liaison du corps d'essieu (1) avec le véhicule.

14. Véhicule à structure surbaissée avec un corps d'essieu (1) selon l'une des revendications 1 à 13.
